# EUROPEAN PATENT SPECIFICATION

(11) **EP 0 370 728 B1**
(45) Date of publication and mention of the grant of the patent: **18.01.1995**
(21) Application number: 89312003.0
(22) Date of filing: 20.11.1989
(51) Int. Cl.: C01F 5/02, C01F 5/08, C01F 5/14

(54) **High-dispersibility magnesium oxide and process for the production thereof**
Hoch dispergierbares Magnesiumoxid und Verfahren zur Herstellung davon
Oxyde de magnésium très dispersable et procédé de production

(30) Priority: 21.11.1988 JP 292508/88
(43) Date of publication of application: 30.05.1990
(73) Proprietor: KYOWA CHEMICAL INDUSTRY CO., LTD., Takamatsu-shi Kagawa-ken (JP)
(72) Inventor: Miyata, Shigeo, Takamatsu-shi Kagawa-ken (JP); Takahashi, Hideo, Sakaide-shi Kagawa-ken (JP)
(74) Representative: Cresswell, Thomas Anthony

(56) References cited:
- EP-A- 0 189 098
- DE-A- 2 646 965
- US-A- 4 145 404
- CHEMICAL ABSTRACTS, vol. 96, no. 24, June 82 Columbus, Ohio, USA page 136;left-hand column; ref. no. 201986 G &JP-A-82034022
- PATENT ABSTRACTS OF JAPAN vol. 10, no. 269 (C-372)(2325) 12 September 86,& JP-A-61 091232
- CHEMICAL ABSTRACTS, vol. 104, no. 4, January 86 Columbus, Ohio, USA page 108;right-hand column; ref. no. 21395 P & JP-A-60176918

## Description

The present invention relates to a process for producing a high-dispersibility magnesium oxide having a BET specific surface area of 10 to 200 m²/g, a 50 percent diameter, as a secondary particle, of 0.1 to 1.5 µm and a 90 percent diameter, as a secondary particle, of not more than 3.0 µm.

Magnesium oxide is a nontoxic basic oxide, of which the resources are abundantly available, and hence it has been and is utilized in various fields. For example, it is used as an acid acceptor for halogenated rubbers such as chloroprene or chlorosufonated polyethylene, as a neutralizing or adsorbing agent for, for example, hydrogen halide or acetic acid, generated from resins such as vinyl chloride and ethylene-vinyl acetate (EVA) copolymer, as a thickening agent for fiber reinforced plastics (FRP) and as a material for ceramics.

JP-A-61/91232 discloses the preparation of magnesium oxide, for use in filling resins, by calcining high purity magnesium hydroxide at a high temperature and surface treating it with a coupling agent.

However, the use of conventional magnesium oxides has caused various problems. For example, when conventional magnesium oxides are used as thickening agents for FRP, the viscosity increases slowly with time, and a long period is required to reach the final viscosity. Hence, workability and production efficiency are degraded. The use of conventional magnesium oxides as an agent for neutralizing an acid content existing in a rubber or resin reduces the mechanical strength of a rubber or resin, such as tensile strength or Izod impact strength. Further, when they are used in an electrically semiconductive film for a high-tension layer cable of EVA as an agent for preventing acetic acid-corrosion of a copper wire, dielectric breakdown voltage of an EVA film is sharply decreased. Furthermore, the use thereof as a material for ceramics makes it difficult to obtain a fine sintered body.

The present invention seeks to provide a process for producing a magnesium oxide having excellent activity and dispersibility and having a small diameter as a secondary particle.

According to the present invention, there is provided a process for the production of a magnesium oxide which comprises:-
(a) heating a basic magnesium chloride or nitrate of the formula

   Mg(OH)₂₋ₓAₓ.mH₂O

   wherein A represents C1 or NO₃, x represents a number in the range of 0<x<0.2, and m represents a number of from 0 to 6
   and having main interplanar spacings of 0.82, 0.41, 0.27, 0.20, 0.156 and 0.154 nm (8.2Å, 4.1Å, 2.7Å, 2.0Å, 1.56Å and 1.54Å) measured by X-ray diffraction, in a reaction mother liquor of the basic magnesium chloride or nitrate under elevated pressure or atmospheric pressure at a temperature of between 50°C and 200°C to obtain a magnesium hydroxide having a BET specific surface area of 1 to 50 m²/g, a 50 percent diameter, as a secondary particle, of 0.1 to 1.5 µm, and a 90 percent diameter, as a secondary particle of not more than 4.0 µm, and
(b) firing the magnesium hydroxide from step (a) at a temperature of between 400°C and 1,200°C to obtain a magnesium oxide having BET specific surface area of 10 to 200 m²/g, a 50 percent diameter, as a secondary particle, of 0.1 to 1.5 µm, and a 90 percent diameter, as a secondary particle, of not more than 3.0 µm.

The resulting magnesium oxide can be used as a thickening agent for resins, such as FRP, to make the resins exhibit an almost ideal S-letter-shaped change of viscosity with time. The magnesium oxide can also be used as an agent for neutralizing an acid content in a rubber or resin, without degrading their mechanical strength and can impart the rubber or resin with excellent moldability. The magnesium oxide can also be used in a resin as a corrosion preventor without causing any substantial fish eye (visible defect in the form of a void) in a molded article of the resin, and as an electric insulating layer without lowering dielectric breakdown voltage. Further, the magnesium oxide exhibits excellent sinterability as a ceramic.

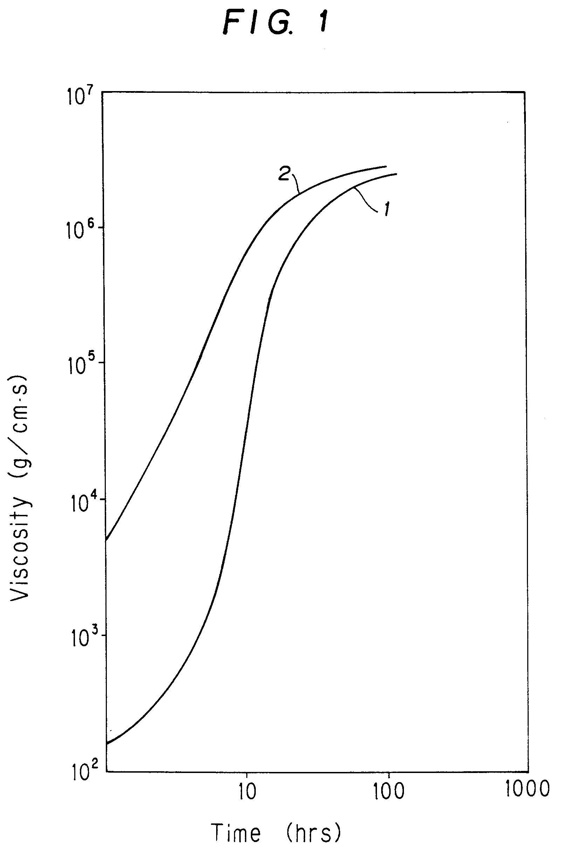

Figure 1 shows changes of viscosities with time when magnesium oxides of Example 1 and Comparative Example 2 were used, in which numeral 1 indicates a change of viscosity with time in case of using the magnesium oxide of Example 1, and numeral 2 indicates a change of viscosity with time in case of using the magnesium oxide of Comparative Example 2.

The magnesium oxide produced by the process of the present invention is active and highly dispersible. As a result, it has a feature that when it is incorporated, for example, into FRP the FRP exhibits a low initial viscosity and a sharp viscosity increase, and hence the final viscosity thereof is reached in a short period of time. That is, since the magnesium oxide works as an ideal thickening agent, and since the FRP into which the magnesium oxide is incorporated exhibits an ideal change of viscosity with time, i.e. S-letter-shaped change, the magnesium oxide has the advantages of imparting excellent workability and shortening the molding cycle. The low initial viscosity means that the impregnation ability of resins e.g. unsaturated polyester is improved.

When the magnesium oxide is added to a rubber or resin, not only degradation of their mechanical strength such as tensile strength or Izod impact strength can be remarkably prevented, but also the rubber or resin can be easily molded into articles having a very small thickness such as a film, and further, there can be provided molded articles having a good appearance which is substantially free from any fish eye. Thus, even if it is used in a filmy electric insulating layer of EVA, no fish eye is caused, and the dielectric breakdown voltage is not lowered. Further, when it is used as a ceramic, it exhibits excellent sinterability and gives a fine sintered body. Thus, ceramics obtained therefrom hence have excellent mechanical strength.

Conventional active magnesium oxides have high aggregation ability, and hence their secondary particles have a large diameter. Namely, their secondary particles have a 50 percent diameter of 3 to 10 µm, and a 90 percent diameter of 5 to 40 µm.

Meanwhile, the magnesium oxide produced by the process of the present invention has a feature in that all of its secondary particles have a secondary particle diameter of as small as 3 µm or less.

The magnesium oxide obtained according to the process of the invention may be surface-treated with an ordinary surface-treating agent in order to promote its compatibility with a rubber or resin. The amount of the surface-treating agent for use is desirably from 0.1 to 10 % by weight based on the magnesium oxide.

Examples of the surface-treating agent usable in the present invention include high fatty acids such as lauric acid, oleic acid and stearic acid, fatty acid esters of polyhydric alcohols such as glycerin mono- or distearate, sorbitan mono- or dilaurate and pentaerythritol monostearate, silane-based coupling agents such as vinyltriethoxysilane, γ-aminopropyltrimethoxysilane and β-(3,4-epoxycyclohexyl)ethyltrimethoxysilane, titanium-based coupling agents such as isopropyltriisostearoyl titanate, isopropyltri(N-aminoethyl-aminoethyl) titanate and bis(dioctylpyrophosphate)oxyacetate titanate, aluminum-based coupling agents such as acetoalkoxyaluminumdiisopropylate, and polyethylene wax.

The surface treatment of the magnesium oxide with the surface-treating agent can be carried out according to customary means. For example, a powder of the magnesium oxide is charged into a Henschel mixer, and while the powder is stirred at a high speed, a suitable amount of the surface-treating agent is added directly, or a suitable amount of the surface-treating agent is diluted in a solvent and added dropwise, and these components are fully mixed.

The X-ray diffraction patterns of a basic magnesium chloride and basic magnesium nitrate usable in the present invention are shown in Tables 1 and 2.

**TABLE 1**

| (basic magnesium chloride) | | |
|---|---|---|
| Spacing d_{Å} | Relative intensity I/Iₒ | Face indices hkl (Miller indices) |
| 8.2 | 100 | 003 |
| 4.1 | 48 | 006 |
| 2.70 | 27 | 101 |
| 2.26 | 34 | 106 |
| 2.03 | 9 | 108 |
| 1.56 | 39 | 110 |
| 1.54 | 14 | 113 |

**TABLE 2**

| (basic magnesium nitrate) | | |
|---|---|---|
| Spacing d_{Å} | Relative intensity I/Iₒ | Face indices hkl |
| 8.2 | 100 | 003 |
| 4.1 | 42 | 006 |
| 2.65 | 15 | 102 |
| 2.37 | 15 | 105 |
| 2.02 | 9 | 108 |
| 1.56 | 19 | 110 |
| 1.54 | 9 | 113 |

The process for the production of the basic magnesium chloride or nitrate usable in the present invention, represented by the aforementioned formula and having a diffraction patterns described above is disclosed in U.S. Patent 4,145,404. A summary of said process is as follows:-
The process comprises reacting magnesium chloride or magnesium nitrate with an alkali substance such as calcium hydroxide, ammonia, sodium hydroxide or potassium hydroxide, in an aqueous medium, preferably a solution of calcium chloride in water, at a temperature of not more than about 40°C, preferably not more than 30°C, under a condition that the equivalent ratio of an alkali to magnesium ions is not more than 0.95, preferably not more than 0.9.

The magnesium hydroxide, a precusor of the magnesium oxide, is obtained by heating the magnesium chloride or nitrate, which is produced as above, in reaction mother liquor thereof under elevated pressure or atmospheric pressure at a temperature between 50°C and 200°C. The reaction mother liqour works to prevent hydrolysis of the basic magnesium chloride or nitrate, and the co-presence thereof is hence essential for formation of a high-activity high-dispersibility magnesium hydroxide which forms aggregates consisting of a small number of crystallites and is usable in the present invention. It is preferable that calcium chloride is co-present in the reaction mother liquor. When calcium chloride is added to materials to be used for the formation of the basic magnesium chloride or nitrate, or when it is added to the basic magnesium chloride or nitrate before decomposition thereof under heat, the formed magnesium hydroxide has improved dispersibility. In order to achieve such an effect sufficiently, the necessary concentration of calcium chloride in the reaction mother liquor is at least 0.1 mole/ℓ, preferably 0.5 mole/ℓ.

The BET specific surface area of the magnesium hydroxide tends to be smaller with an increase in the heating temperature, and hence the heating temperature may be changed to control the BET specific surface area, i.e. activity, of the magnesium hydroxide being formed.

The heating temperature has something to do with crystal grain diameter and dispersibility (aggregation ability) of the formed magnesium hydroxide. That is, there is a tendency that with an increase in the heating temperature, the crystal grain diameter of the magnesium hydroxide becomes greater while the aggregation becomes less.

The high-dispersibility magnesium oxide is produced by firing the magnesium hydroxide, which is obtained according to the above process, in a powder or granular state under an atmosphere of an inert gas such as ambient atmosphere, nitrogen or helium, an oxidizing or reducing gas such as oxygen or hydrogen, under reduced pressure or elevated pressure at a temperature between 400°C and 1,200°C, preferably between 400°C and 1,000°C for a period of time from several minutes to several hours.

The magnesium hydroxide, a precursor of the high-dispersibility magnesium oxide, has a BET specific surface area of from 1 to 50 m²/g, preferably from 5 to 30 m²/g, a 50 percent diameter, as a secondary particle, of from 0.1 to 1.5 µm, preferably from 0.1 to 1.0 µm, and a 90 percent diameter, as a secondary particle, of not more than 4.0 µm, preferably not more than 2.0 µm.

The dispersibility of the high-dispersibility magnesium oxide produced by the process of the present invention is closely related to the dispersibility of the precursor magnesium hydroxide. There is a tendency that magnesium hydroxides having better dispersibility give magnesium oxides having higher dispersibility.

The activity (BET specific surface area) of the high-dispersibility magnesium oxide produced by the process of the present invention is influenced by firing temperature, firing atmosphere and crystal grain diameter of the precursor magnesium hydroxide. With an increase in the firing temperature from 400°C, the resultant magnesium oxide tends to have a smaller BET specific surface area. Further, there is a tendency that the greater the BET specific surface area of the precursor magnesium hydroxide in the range of from 1 to 50 m²/g is, the higher the activity of the resultant magnesium oxide is. There is no special limitation to be imposed on the firing atmosphere. However, the lower the pressure is, the higher the activity of the resultant magnesium oxide tends to be. The lower limit of the firing temperature is the lowest temperature required to form the magnesium oxide of the present invention by decomposition of the magnesium hydroxide, and the upper limit of the firing temperature stands for the highest temperature at which only a little sintering of the magnesium oxide takes place. At a temperature at which sufficient sintering occurs, crystals of the magesium oxide mutually bond to one another, and hence the resultant secondary particles are coarse.

In the present invention, the BET specific surface area, the 50 percent diameter and 90 percent diameter of the secondary particles and the hardness of the secondary particles were measured according to the following methods.

### BET specific surface area:-

Measurement was made by a three-point plotting method according to a nitrogen adsorption method, in which the adsorption area per N₂ molecule was taken as 16.2_{Å}². Samples for measurement were subjected to gas evacuation treatment under vacuum at 100°C for 30 minutes, and isothermic lines of nitrogen adsorption were measured.

### Secondary particle diameter:-

A sample (0.7 g) was charged into a 100 mℓ beaker, and, while 70 ml of deionized water was gradually added, the mixture being formed was well dispersed. Then, the mixture was subjected to dispersion treatment using an ultrasonic homogenizer for 3 minutes. Immediately thereafter, part of the dispersion was taken, and the secondary particle diameter thereof was measured by using a microtrack particle size distribution analyzer manufactured by Leeds & Northrop Instruments.

### Hardness:-

Measurement was made according to JIS-K6301-A.

The present invention will be illustrated by referring to Examples.

### EXAMPLES 1∼3

5 ℓ of a mixed aqueous solution (having a temperature of 15°C) consisting of 2.5 ℓ of an aqueous solution containing 4 moles/ℓ of magnesium chloride and 2.5 ℓ of an aqueous solution containing 2 moles/ℓ of calcium chloride was charged into a cylindrical reactor of stainless steel having a volume of about 10 ℓ, and the mixture was stirred with a chemistirrer. Then, 4.0 ℓ of a slurry (having a temperature of 15°C) containing 2 moles/ℓ of calcium hydroxide was all added thereto over about 2 minutes. Said amount, 4.0 ℓ, of the slurry corresponded to an equivalent of 0.8 to that of magnesium. Part of the resultant suspension containing a white precipitate was immediately filtered under reduced pressure, then washed with a large amount of acetone, and dehydrated. The resultant product was dried at room temperature for about 1 hour, and subjected to X-ray diffraction and chemical analysis.

In the X-ray diffraction, the product showed substantially the same X-ray diffraction pattern as that of the basic magnesium chloride shown in Table 1. Further, the chemical analysis showed that the product had a chemical composition of Mg(OH)_{1.81}Cl_{0.19}·mH₂O.

The remaining suspension containing a white precipitate was heated together with reaction mother liquor thereof at 100°C for 2 hours. Then, the resultant product was dehydrated, washed with water and dried to give a magnesium hydroxide having a BET specific surface area of 23 m²/g, a 50 percent diameter, as a secondary particle, of 0.84 µm and a 90 percent diameter, as a secondary particle, of 1.89 µm.

The magnesium hydroxide obtained above was separated into three portions, and these portions were fired in an electric furnace under air atmosphere for 2 hours at temperatures of 550°C (Example 1), 700°C (Example 2) and 850°C (Example 3). Then, the fired products were pulverized by using an atomizer (manufactured by Fuji Powder) under a condition that the opening diameter of a screen was 2 mm, and further subjected to a 200 mesh sieve (sieve opening 74 µm). Table 3 shows BET specific surface areas, and 50 percent and 90 percent diameters, as a secondary particle, of the resultant magnesium oxides.

### EXAMPLES 4∼6

6 ℓ of an aqueous solution (having a temperature of 20°C) containing 2.0 moles/ℓ of magnesium nitrate was charged into a cylindrical reactor of stainless steel having a volume of about 12 ℓ, and stirred with a chemistirrer. Then, 2.7 ℓ of ammonia water (having a temperature of 20°C) containing 8 moles/ℓ of ammonia was all added thereto over about 2 minutes. Said amount, 2.7 ℓ, of the ammonia water corresponded to an equivalent of 0.9 to that of magnesium. Part of the resultant suspension containing a white precipitate was taken as a sample, and the sample was dehydrated, washed with acetone and dried at room temperature for about 1 hour. The resultant sample had an X-ray diffraction pattern substantially identical with that shown in Table 2. Further, chemical analysis of the sample showed that it had a chemical composition of Mg(OH)_{1.85}(NO₃)_{0.15}·mH₂O.

Both the remaining reaction product and its reaction mother liquor were charged into an autoclave, and heated and pressurized at 150°C for 2 hours. Thereafter, the resultant product was dehydrated, washed with water and dried to give a magnesium hydroxide having a BET specific surface area of 6 m²/g, a 50 percent diameter of 0.73 µm and 90 percent diameter of 1.51 µm.

The magnesium hydroxide obtained above was separated into three portions, and the three portions were fired in a silicon oxide heating element type furnace for 1 hour at temperatures of 800°C (Example 4), 900°C (Example 5) and 1,000°C (Example 6). The fired products were pulverized by using an atomizer with a screen opening of 2 mm, and further subjected to a 200 mesh sieve.

Table 3 shows the results of measurement of BET specific surface areas and 50 percent and 90 percent diameters, as a secondary particle, of the resultant magnesium oxides.

### COMPARATIVE EXAMPLES 1∼2

Table 3 also shows BET specific surface areas and 50 percent and 90 percent diameters, as a secondary particle, of two kinds of magnesium oxides which are commercially available.

**TABLE 3**

| | BET specific area (m²/g) | Secondary article diameter | |
|---|---|---|---|
| | | 50 percent | 90 percent |
| Example 1 | 164 | 0.55 | 1.18 |
| Example 2 | 51 | 0.55 | 1.39 |
| Example 3 | 32 | 0.50 | 1.05 |
| Example 4 | 40 | 0.75 | 1.53 |
| Example 5 | 21 | 0.81 | 1.62 |
| Example 6 | 15 | 0.94 | 1.89 |
| Comparative Example 1 | 159 | 5.71 | 18.00 |
| Comparative Example 2 | 30 | 4.28 | 12.94 |

### REFERENTIAL EXAMPLE 1

### (Acid acceptor and vulcanizing agent for chloroprene rubber)

The magnesium oxide obtained in Example 1 as an acid acceptor, a chloroprene rubber and other components were mixed as shown in the following formulation.

| | |
|---|---|
| Chloroprene rubber (Neoprene® GS, manufactured by Showa Neoprene Co., Ltd.) | 100 parts by weight |
| Magnesium oxide | 4 parts by weight |
| Stearic acid | 0.5 part by weight |
| Zinc oxide | 5 parts by weight |

Further, the commercially available magnesium oxide shown in Comparative Example 1, and a chloroprene rubber and other components described above were mixed in the same way as above.

These two mixtures were respectively kneaded uniformly in an open roll, and they were partly subjected to a Mooney scorch test and also partly press-molded at 153°C for 30 minutes to evaluate physical properties of vulcanized products. In addition, the Mooney scorch test was carried out according to JIS K6300, and moduli and compressive permanent strains were measured according to JIS K6301. Table 4 shows the results.

**Table 4**

| Storage stability (Mooney scorch, 125°C) | Kind of magnesium oxide | |
|---|---|---|
| | The invention, | Commercially available one |
| Original | | |
| Vm minimum viscosity (Mooney) | 20.9 | 21.3 |
| T₅ | 32.7 | 26.0 |
| T₃₅ | 60.0 | 34.9 |

| After 8 days, 38°C, 90 % RH | | |
|---|---|---|
| Vm minimum viscosity (Mooney) | 20.7 | 20.6 |
| T₅ | 30.8 | 26.0 |
| T₃₅ | 57.6 | 50.8 |

| Physical properties of vulcanized product | | |
|---|---|---|
| 300 % modulus (kg/cm²) | 29 | 27 |
| 600 % modulus (kg/cm²) | 82 | 70 |
| Tensile strength (kg/cm²) | 282 | 309 |
| Elongation (%) | 859 | 882 |
| Hardness | 51 | 48 |

| Compressive permanent strain | | |
|---|---|---|
| 100°C, after 22 hours (%) | 52.8 | 56.6 |
| Notes) T₅: a period of time (minute) required for an increase of 5 units T₃₅: a period of time (minute) required for an increase of 35 units. | | |

The rubber containing the magnesium oxide of the present invention clearly exhibits larger values for T₅ and T₃₅ and better storage stability than conventional ones. Further, the vulcanized product containing the magnesium oxide of the present invention exhibits higher moduli and hardness than that containing the conventional one, and further, the vulcanized product containing the magnesium oxide of the present invention exhibits smaller permanent strain than that containing the conventional one. That is, the magnesium oxide of the present invention is superior to conventional ones with regard to both storage stability and mechanical strength of vulcanized products.

### REFERENTIAL EXAMPLE 2

### (Thickening agent for FRP)

100 parts by weight of an unsaturated polyester resin (trade name: Epolac® N-21, manufactured by Nippon Shokubai K.K.), 100 parts by weight of calcium carbonate (NS-100, manufactured by Nitto Funka K.K.) and 0.8 part by weight of the magnesium oxide obtained in Example 3 were mixed with a spoon for 1.5 minutes, further mixed in a homogenizer for 2 minutes, and then put into an oven having a temperature of 35°C to measure a change of viscosity with time by using a Brookfield viscometer.

Further, the commercially available magnesium oxide shown in Comparative Example 2, and other components mentioned above except for the magnesium oxide were treated in the same way as described above.

Figure 1 shows changes of viscosities with time concerning the resultant FRP's. In Figure 1, numeral 1 indicates a case of using the magnesium oxide obtained in Example 1, and numeral 2 indicates a case of using the magnesium oxide shown in Comparative Example 2.

The magnesium oxide of the present invention is an ideal since a resin or rubber containing the magnesium oxide of the present invention exhibits a low initial viscosity and a subsequent S-letter-shaped change of viscosity with time, whereas a resin or rubber containing the commercially available one exhibits a high initial viscosity and a low thickening rate, and is clearly inferior to the magnesium oxide of the rpesent invention.

### REFERENTIAL EXAMPLE 3

### (Antacid)

In order to prevent corrosion and an offensive odour by neutralizing acetic acid being generated from an EVA film, 2 parts by weight of a magnesium oxide was incorporated into 100 parts by weight of EVA having a vinyl acetate content of 20 %, and the mixture was melted and kneaded in an extruder, and molded into a film having a thickness of 20 µm according to a T-die method.

As the above magnesium oxide, the magnesium oxide obtained in Example 4 and the commercially available magnesium oxide shown in Comparative Example 2 were used, and before the use, these magnesium oxides had been respectively prepared by heating them to about 100°C, adding 2 % by weight of isopropyltriisostearoyl titanate diluted with n-hexane and fully stirring the mixture in a Henschel mixer for about 20 minutes.

Visual observation of the resultant films showed that the film containing the magnesium oxide produced by the process of the present invention exhibited no fish eye and had good transparency, whereas the film containing the commercially available magnesium oxide showed many fish eyes. Microscopic observation of these fish eyes showed that these fish eyes were about 50∼100 µm aggregates of magnesium oxide.

### REFERENTIAL EXAMPLE 4

As a thermal stabilizer for acrylonitrile-butadiene-styrene copolymer (ABS), 1 part by weight of the magnesium oxide obtained in Example 5 or the magnesium oxide shown in Comparative Example 2 was incorporated into and mixed with 100 parts by weight of an ABS copolymer, and then the mixtures were respectively injection-molded at about 230°C. The Izod impact strength and tensile strength of each of the molded articles were measured. Table 5 shows the results.

**Table 5**

| Kind of magnesium oxide | Izod Impact strength (kg·cm/cm) | Tensile strength (kg/cm²) |
|---|---|---|
| Example 5 | 8.0 | 480 |
| Comparative Example 2 | 7.1 | 455 |

## Claims

1. A process for the production of a magnesium oxide which comprises:-
(a) heating a basic magnesium chloride or nitrate of the formula
Mg(OH)₂₋ₓAₓ.mH₂O
wherein A represents C1 or NO₃, x represents a number in the range of 0<x<0.2, and m represents a number of from 0 to 6
and having main interplanar spacings of 0.82, 0.41, 0.27, 0.20, 0.156 and 0.154 nm (8.2Å, 4.1Å, 2.7Å, 2.0Å, 1.56Å and 1.54Å) measured by X-ray diffraction, in a reaction mother liquor of the basic magnesium chloride or nitrate under elevated pressure or atmospheric pressure at a temperature of between 50°C and 200°C to obtain a magnesium hydroxide having a BET specific surface area of 1 to 50 m²/g, a 50 percent diameter, as a secondary particle, of 0.1 to 1.5 µm, and a 90 percent diameter, as a secondary particle of not more than 4.0 µm, and
(b) firing the magnesium hydroxide from step (a) at a temperature of between 400°C and 1,200°C to obtain a magnesium oxide having BET specific surface area of 10 to 200 m²/g, a 50 percent diameter, as a secondary particle, of 0.1 to 1.5 µm, and a 90 percent diameter, as a secondary particle, of not more than 3.0 µm.

2. A process according to claim 1 wherein the magnesium hydroxide from step (a) has a BET specific surface area of 5 to 30 m²/g, a 50 percent diameter, as a secondary particle, of 0.1 to 1.0 µm, and a 90 percent diameter, as a secondary particle, of not more than 2.0 µm.

3. A process according to claim 1 or 2 wherein the reaction mother liquor used in step (a) contains not less than 0.1 mole/ℓ of calcium chloride.

4. A process according to claim 1, 2 or 3 wherein the magnesium oxide from step (b) has a specific surface area of 20 to 200 m²/g.

5. A process according to any one of the preceding claims wherein the magnesium oxide from step (b) is surface treated with at least one surface-treating agent selected from a high fatty acid, ester of a high fatty acid and a polyhydric alcohol, a silane-base coupling agent, titanium-based coupling agent, aluminum-based coupling agent and polyethylene wax.

## Patentansprüche

1. Verfahren zur Herstellung eines Magnesiumoxids, das
(a) das Erhitzen eines basischen Magnesiumchlorids oder -nitrats der Formel
Mg(OH)₂₋ₓAₓ·mH₂O,
wobei A ein Cl oder NO₃, x eine Zahl in dem Bereich 0<x<0,2 und m eine Zahl in dem Bereich von 0 bis 6 darstellt
und mit einen Hauptebenenabstands hat von 0,82, 0,41, 0,27, 0,20, 0,156 und 0,154 nm (8,2 Å, 4,1 Å, 2,7 Å, 2,0 Å, 1,56 Å und 1,5 Å) gemessen mittels Röntgenbeugung,
in einer Reaktionsmutterlösung des basischen Magnesiumchlorids oder -nitrats unter erhöhtem Druck oder Atmosphärendruck bei einer Temperatur zwischen 50 °C und 200 °C, um ein Magnesiumhydroxid mit einer BET-spezifischen Oberfläche von 1 bis 50 m²/g, mit einem 50 Prozent Durchmesser, als ein Sekundärteilchen, von 0,1 bis 1,5 µm und mit einem 90 Prozent Durchmesser, als ein Sekundärteilchen, von nicht mehr als 4,0 µm, zu erhalten, und
(b) das Brennen des Magnesiumhydroxids aus Stufe (a) bei einer Temperatur zwischen 400 °C und 1200 °C, um ein Magnesiumoxid mit einer BET-spezifischen Oberfläche von 10 bis 200 m²/g, mit einem 50 Prozent Durchmesser, als ein Sekundärteilchen, von 0,1 bis 1,5 µm und einem 90 Prozent Durchmesser, als ein Sekundärteilchen, von nicht mehr als 3,0 µm, zu erhalten, umfaßt.

2. Verfahren nach Anspruch 1, bei dem das Magnesiumhydroxid aus Stufe (a) eine BET-spezifische Oberfläche von 5 bis 30 m²/g, mit einem 50 Prozent Durchmesser, als ein Sekundärteilchen, von 0,1 bis 1,0 µm und mit einem 90 Prozent Durchmesser, als ein Sekundärteilchen, von nicht mehr als 2,0 µm.

3. Verfahren nach Anspruch 1 oder 2, bei dem die Reaktionsmutterlösung, die in Stufe (a) verwendet wird, nicht weniger als 0,1 Mol/l Calciumchlorid enthält.

4. Verfahren nach Anspruch 1, 2 oder 3, bei dem das Magnesiumoxid aus Stufe (b) eine spezifische Oberfläche von 20 bis 200 m²/g besitzt.

5. Verfahren nach irgendeinem der vorherigen Ansprüche, bei dem das Magnesiumhydroxid aus Stufe (b) mit wenigstens einem Mittel zur Oberflächenbehandlung, ausgewählt aus einer höheren Fettsäure, einem Ester einer höheren Fettsäure und einem mehrwertigen Alkohol, einem auf Silan basierenden Haftmittel, einem auf Titan basierenden Haftmittel, einem auf Aluminium-basierenden Haftmittel und einem Polyethylenwachs, oberflächenbehandelt wird.

## Revendications

1. Procédé pour la production d'un oxyde de magnésium qui comprend :
(a) le chauffage d'un chlorure ou d'un nitrate de magnésium basique de formule
Mg(OH)₂₋ₓAₓ.mH₂O
dans laquelle A représente Cl ou NO₃, x représente un nombre tel que 0<x<0,2, et m représente un nombre compris entre 0 et 6 et ayant des écartements des plans principaux de 0,82, 0,41, 0,27, 0,20, 0,156 et 0,154 nm (8,2Å, 4,1Å, 2,7Å, 2,0Å, 1,56Å et 1,54Å) mesurés par diffraction des rayons X, dans un liquide mère réactionnel du chlorure ou du nitrate de magnésium basique sous pression élevée ou pression atmosphérique à une température comprise entre 50°C et 200°C pour obtenir un hydroxyde de magnésium ayant une surface spécifique BET de 1 à 50 m²/g, [-] à 50 pour-cent un diamètre, exprimé pour particule secondaire, de 0,1 à 1,5 µm, et un diamètre à 90 pour-cent, exprimé pour particule secondaire de pas plus de 4,0 µm, et
(b) le chauffage de l'hydroxyde de magnésium de l'étape (a) à une température comprise entre 400°C et 1200°C pour obtenir un oxyde de magnésium ayant une surface spécifique BET de 10 à 200 m²/g, un diamètre à 50 pour-cent, exprimé pour une particule secondaire, de 0,1 à 1,5µm, et un diamètre à 90 pour-cent, exprimé pour une particule secondaire, de pas plus de 3,0 µm.

2. Procédé selon la revendication 1 dans lequel l'hydroxyde de magnésium de l'étape (a) a une surface spécifique BET de 5 à 30 m²/g, un diamètre à 50 pour cent, exprimé pour une particule secondaire, de 0,1 à 1,0 µm, et un diamètre à 90 pour cent, exprimé pour une particule secondaire, de pas plus de 2,0 µm.

3. Procédé selon la revendication 1 ou 2 dans lequel le liquide mère réactionnel utilisé dans l'étape (a) contient pas moins de 0,1 mole/l de chlorure de calcium.

4. Procédé selon la revendication 1, 2 ou 3 dans lequel l'oxyde de magnésium de l'étape (b) a une surface spécifique de 20 à 200 m²/g.

5. Procédé selon l'une quelconque des revendications précédentes dans lequel l'oxyde de magnésium de l'étape (b) a sa surface traitée avec au moins un agent de traitement de surface sélectionné parmi un acide gras à haut poids moléculaire, un ester d'un acide gras à haut poids moléculaire et un alcool polhydrique, un agent de couplage à base de silane, un agent de couplage à base de titane, un agent de couplage à base d'aluminium et une cire à base de polyéthylène.
